# EUROPEAN PATENT SPECIFICATION

(11) **EP 4 072 306 B1**
(45) Date of publication and mention of the grant of the patent: **05.07.2023**
(21) Application number: 20799704.0
(22) Date of filing: 03.11.2020
(51) Int. Cl.: A23G 9/28, B65D 3/16, B65D 83/00, B65D 85/78, B65D 3/18

(54) **CARTRIDGE, SYSTEM AND METHOD FOR DISPENSING A FROZEN CONFECTION**
KARTUSCHE, SYSTEM UND VERFAHREN ZUR AUSGABE EINES GEFRORENEN KONFEKTS
CARTOUCHE, SYSTÈME ET PROCÉDÉ DE DISTRIBUTION D'UNE CONFISERIE CONGELÉE

(30) Priority: 11.12.2019 EP 19215398
(43) Date of publication of application: 19.10.2022
(73) Proprietor: Unilever IP Holdings B.V., 3013 AL Rotterdam (NL)
(72) Inventor: JOUSSE, Fabien, Frédéric, Raymond, Marie, Sharnbrook Bedford Bedfordshire MK44 1LQ (GB); SHERWOOD, Paul, Leonard, Sharnbrook Bedford Bedfordshire MK44 1LQ (GB)
(74) Representative: Fijnvandraat, Arnoldus
(86) International application number: PCT/EP2020/080737
(87) International publication number: WO 2021/115683

(56) References cited:
- EP-A1- 0 995 685
- US-B1- 6 371 335

## Description

### Field of the invention

The present invention relates to a cartridge, system and method for dispensing a frozen confection, such as ice cream. More particularly the present invention relates to such cartridges, methods and systems where the cartridge comprises a tubular body having an inwardly projecting rim at a dispensing end, a piston slidable within the tubular body, and an end piece closing the dispensing end of the tubular body and comprising a dispensing aperture. The invention is set out in the appended set of claims.

### Background of the invention

In recent years, systems for dispensing frozen confections such as soft ice cream have been developed in which pre-packaged ice cream is delivered from a container by a dispensing device.

In one type of system, gas pressure is used to apply a dispensing force. For example, WO 2013/124193 A discloses a method for dispensing a frozen confection comprising: providing a refrigerated, insulated chamber, which houses at least one container, containing a frozen confection at a temperature of -12 °C or below; wherein the at least one container has an outlet which is closed by a self-closing valve; wherein the container comprises a flexible bag containing the frozen confection located inside a bottle; pressurising gas in the region inside the bottle and outside the flexible bag thereby applying pressure to the frozen confection so that the valve opens and the frozen confection is forced out of the container through the outlet; releasing the pressure so that the valve closes.

The use of pressurized gas requires containers made from materials that can be both gas-tight and withstand high internal pressure. Thus typically such containers are formed from plastic material such as polyethylene terephthalate (PET).

In another type of system, collapsible containers are used and a dispensing force is used to simultaneously push out the frozen confection whilst collapsing the container. For example, US 2002/0119221 A discloses a push-out method for food from a food package comprising steps as follows: providing a push-out device comprising a container receiving member having a substantially cylindrical trunk member and a bottom member provided in its central zone with a through-hole, and a depressing member adapted to be guided into the cylindrical trunk member from above; setting the food package in the container receiving member; compressing the food package by the depressing member from above toward the bottom while the container made of soft material is controllably guided along the inner surface of the cylindrical trunk member or a peripheral surface of the through-hole of the bottom member so that the container may be prevented from shifting sideways until the container is flattened; and thereby forcing out the content food through the push-out aperture and the through-hole of the bottom of the container made of soft material.

Collapsing a container made from soft material can lead to splitting and/or damage to the container thus resulting in fouling of the dispensing device and hygiene issues. Furthermore the device requires complex guiding and containment means to ensure the package collapses in a controlled manner.

In yet another type of system, cartridges are employed that contain an internal piston whereby a dispensing device is used that has a plunger for driving the piston through the cartridge and generating the dispensing force. For example, EP 0 995 685 A discloses a dispensing system for frozen desserts including a plurality of containers and a dispensing device. Each container contains an individual portion of frozen dessert, and includes a substantially cylindrical tube having first and second ends, a nozzle means towards the first end, and a piston means located between the nozzle means and second end, which is adapted for sliding movement along the tube. The individual portion of frozen dessert is contained within the cylindrical tube between the nozzle means and piston means. The dispensing device includes a plunger means mounted for reciprocating movement along a longitudinal axis, a drive means for driving the plunger along the axis, and a support means for supporting the first end of the container with the plunger in engagement with the piston means. The arrangement is such that with the container located on the support means, the individual portion of frozen dessert may be dispensed by actuating the drive means.

Such cartridge-based systems have proved commercially successful and have been made widely available under such brands as Cornetto^{®}. They are especially attractive owing to the simple, hygienic and inexpensive form of dispensing device that can be used. As the dispensing force within such cartridges is large, especially when ice cream is dispensed at low temperatures such as -18 °C, until now the commercially available systems have employed cartridges formed from plastic material such as PET or polypropylene (PP).

The present inventors have now recognized that there is a need for improvements in systems for dispensing frozen confections. In particular the inventors have recognized a need to provide a system that affords the advantages of a cartridge-based system but which eliminates or at least reduces the need for single-use plastic.

### Summary of the invention

In a first aspect, the present invention is directed to a cartridge from which a frozen confection can be dispensed, the cartridge comprising:
- a tubular body extending from an open end to a dispensing end and comprising an inwardly projecting rim at the dispensing end;
- a piston slidable within the tubular body;
- an end piece closing the dispensing end of the tubular body and comprising a dispensing aperture; and
- frozen confection contained within the tubular body between the piston and the end piece;
wherein the end piece is not fixed to the tubular body and is retained within the tubular body by the rim.

By providing a cartridge where the end piece is held in place by the rim and is not fixed to the tubular body certain advantages are realised in terms of the flexibility to chose the materials from which each of the piston, tubular body and end piece are made from and/or the way in which the tubular body can be collapsed after use. For example, both the end piece and the piston can be removed from the tubular body after dispensing.

Preferably the tubular body is formed from cardboard. Additionally or alternatively one or both of the piston and end piece is formed from cardboard.

As used herein, where an element (i.e., tubular body, end piece, or piston etc) is referred to as "formed from cardboard" this means that at least the structural parts of that element consist essentially of cardboard. Typically such an element will comprise at least 70% by weight cardboard, more preferably at least 80%, more preferably still at least 90% and most preferably from 95 to 100% by weight of the element is cardboard. Typically to allow for good moisture barrier properties a small amount of the element will be plastic material, such as a plastic coating (such as polypropylene and/or polyethylene coating). Such a plastic coating should not comprise more than 20% by weight of the element otherwise the suitability of the element for recycling in a paper waste system may be compromised. The cardboard for use in the present invention preferably has a thickness of at least 0.2 mm, more preferably at least 0.3 mm, more preferably still at least 0.4 mm and most preferably from 0.5 to 0.8 mm. Additionally or alternatively the grammage of the cardboard is preferably at least 200 g/m², more preferably at least 300 g/m² and most preferably from 400 to 800 g/m².

Preferably, following dispensing of the frozen confection from the cartridge, the end piece is slidable within the tubular body and out through the open end. This is advantageous as it allows for easy removal of both the piston and end piece such that the tubular body can then be flattened to reduce the volume taken in the recycling system and/or it allows for the end piece and tubular body to be made from different materials and recycled in different streams. Preferably the end piece can be slid away from the rim and/or dislodged by the finger of a user when the cartridge is empty.

The end piece is preferably a substantially planar disc as this allows for simple manufacture from a sheet of material such as cardboard.

The tubular body of the cartridge preferably has an end lip that projects away from the end piece as this allows for the end piece to be out of contact with a support surface when the cartridge is stood on its dispensing end.

In a second aspect the present invention provides a system for dispensing a frozen confection, the system comprising:
(i) a cartridge according to at least claim 1; and
(ii) a device comprising:
   - a seat for locating the cartridge in or on the device; and
   - a plunger positioned for entering the cartridge through the open end of the tubular body with the cartridge located in the seat, and for engaging with the piston and moving the piston towards the end piece thereby creating a dispensing force to urge the frozen confection out of the dispensing aperture.

The seat of the device preferably comprises an annular plate that supports the end piece of the cartridge against the dispensing force. This is especially the case when the end piece is formed from cardboard. The present inventors have found that the forces generated during dispensing a frozen confection from a cartridge can be contained in a cardboard body provided that the body is tubular but that these forces cause significant deformation if the end piece is cardboard or even tend to push the end piece out of the tubular body. By supporting the end piece by an annular plate on the device, however, the inventors have found that the whole (or at least substantially all) of the cartridge can be made from a sustainable material such as cardboard without compromising the performance of the cartridge compared to a conventional cartridge made from polypropylene.

The annular plate preferably surrounds the dispensing aperture when the cartridge is in the seat as then the end piece is supported at all points around the aperture and stress concentration at a particular area that may, for example, lead to tearing at that area can be avoided.

The seat preferably comprises an annular recess surrounding the annular plate. Such a recess can help with locating the cartridge in the seat. This is especially the case where the tubular body of the cartridge has an end lip that projects away from the end piece, as then the end lip can locate in the annular recess.

In some embodiments the annular plate may be arranged in contact with the end piece at all times when the cartridge is located in the seat. Such an arrangement may however, lead to increased likelihood of the plate becoming contaminated with frozen confection and thus needing cleaning between dispensing occasions. In an alternative embodiment, the annular plate is spaced away from the end piece when the cartridge is in the seat and in the absence of the dispensing force. The spacing should not be too great, however as the annular plate would still need to support the end piece during dispensing. Typically the end piece will deform slightly during dispensing until it contacts the annular plate which prevents it from irreversibly deforming, tearing and/or becoming dislocated.

Because the dispensing force is generated by the plunger of the device moving the piston within the tubular body there is no need for the cartridge to be within a container during dispensing, as would be the case, for example, where the dispensing force is generated by collapsing the whole cartridge as in US 2002/0119221 A. Thus it is preferred that the seat of the device is spaced away from but aligned with the plunger and that between the plunger and the seat there are no containment walls. By having free space between the plunger and the seat the cartridge can be easily accessed for removal from the device and the seat can be easily accessed for cleaning.

In a further aspect the present invention provides a method for dispensing a portion of frozen confection from a cartridge, the method comprising the steps of:
a. providing a system according to at least claim 7;
b. locating the cartridge in the seat; and then
c. driving the plunger into the cartridge through the open end of the tubular body to engage with the piston and move the piston towards the end piece thereby creating a dispensing force to urge the frozen confection out of the dispensing aperture.

Preferably following step c, the end piece is removed from the tubular body. More preferably both the piston and the end piece are removed from the tubular body. Most preferably both the piston and the end piece are removed through the open end of the tubular body.

### Detailed description of preferred embodiments

The present invention will now be described, by way of example only, with reference to the drawings, wherein:
Figure 1 shows a perspective view from above and to one side of the open end of a cartridge according to an embodiment of the invention.
Figure 2 shows the cartridge of Figure 1 viewed from above and to one side of the dispensing end.
Figure 3 shows a schematic sectional view of the cartridge of Figure 1 in the seat of a device before dispensing.
Figure 3a shows a detail of part of the cartridge and seat shown in Figure 3.
Figure 4 shows a bottom plan view of the cartridge and seat of Figure 3.
Figure 5 shows a schematic sectional view of the cartridge of Figure 1 in an alternative seat of a device before dispensing.
Figure 6 shows the cartridge and seat of Figure 5 during dispensing.
Figure 7 shows a perspective view from above and to one side of a dispensing device for use in the invention before a cartridge is placed in the seat.
Figure 8 shows a schematic sectional view of the cartridge of Figure 1 after all of the frozen confection has been dispensed from the cartridge.
Figure 9 shows the cartridge of Figure 8 where the end piece and piston have been dislodged from the tubular body.

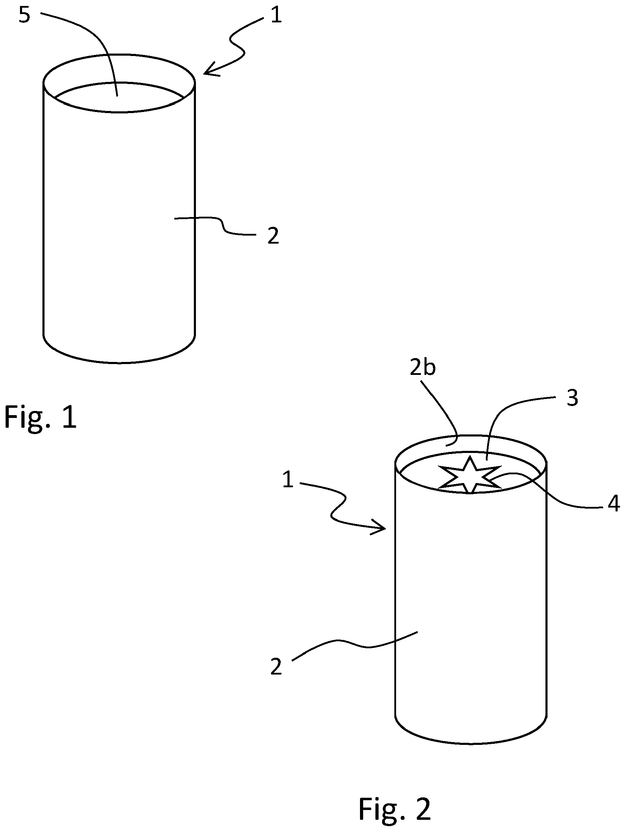

As best seen in Figures 1 to 3, a cartridge (1) according to an embodiment of the invention comprises a tubular body (2) that in this embodiment is in the form of a hollow circular cylinder. The tubular body (2) is preferably formed from cardboard coated with a thin layer of plastic such as polyethylene and/or polypropylene to form a moisture resistant surface on the inside thereof.

Within the tubular body (2) is a piston (5) which in this embodiment is a substantially planar disc with a diameter almost identical with that of the inner-diameter of the tubular body (2) such that the piston (5) fits snugly in the tubular body (2) but can slide up and down within it. The piston could be formed from plastic but is preferably formed from cardboard.

In the full cartridge, as shown in Figures 1 to 3, a portion of frozen confection (30) such as ice cream, is contained within the hollow tubular body (2) between the piston (5) and an end piece (3). In the embodiment shown in Figures 1 to 3, the end piece (3) is a substantially planar disc that fits in and closes the dispensing end of the tubular body (2) and has a star-shaped dispensing aperture (4) in its centre. The end piece (3) is preferably formed from cardboard.

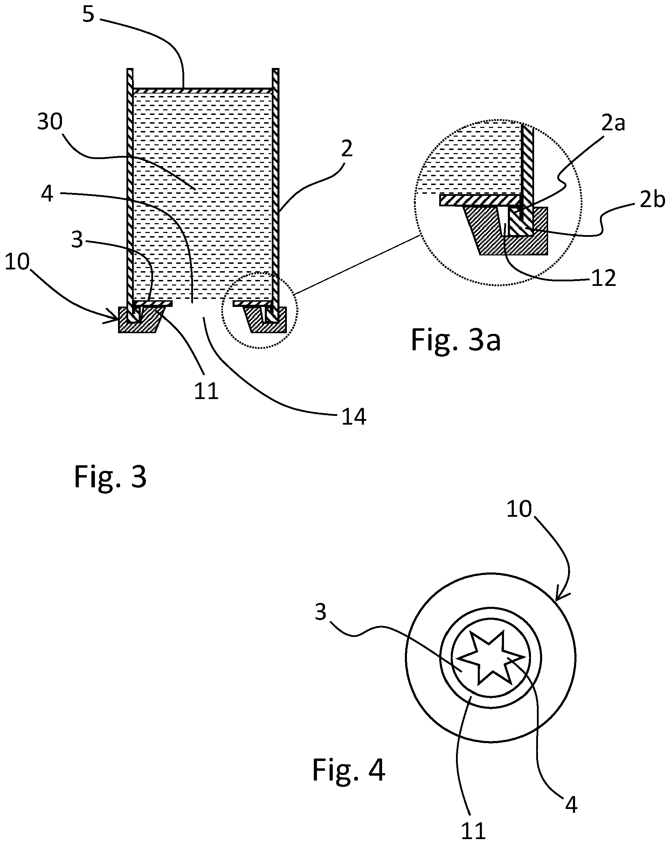

As best seen in Figure 3a, the end piece (3) is held within the tubular body (2) by abutment against a rim (2a) that is formed by folding of the wall of the tubular body (2) back inside the tubular body (2) for a short distance. This also forms an end lip (2b) that projects away from the end piece (3) and on which the cartridge (1) can stand in a self-supporting manner.

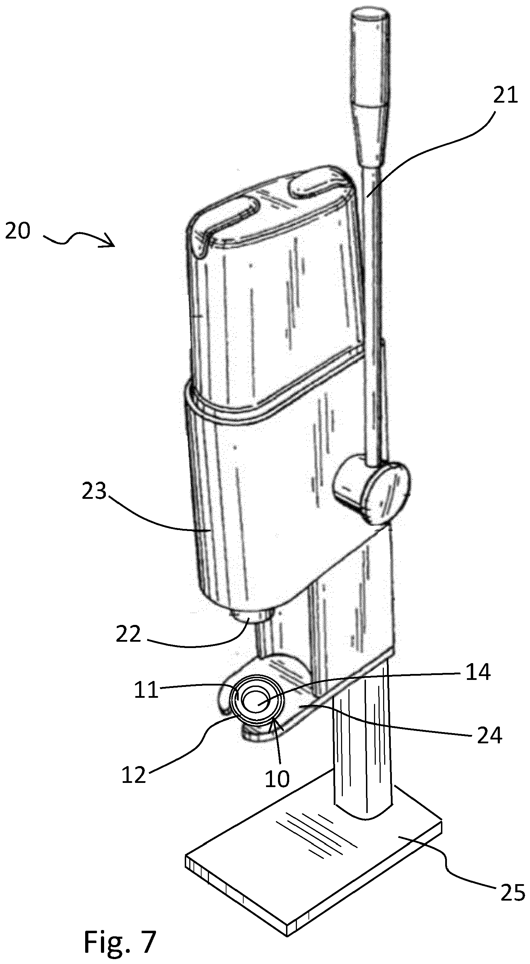

The dispensing device for use in the present invention may be any device capable of driving a plunger into the cartridge (1). Preferably the dispensing device (20) is a conventional dispenser used for soft ice cream dispensing from cartridges and as described, for example, in EP 0 995 685 A but with a modified seat (10). Such a device (20) is shown in Figure 7 with a modified seat (10) as shown in greater detail in Figures 3 and 4.

The device (20) comprises a handle (21) that is connected through a drive mechanism (not shown) contained within a housing (23) to a plunger (22). Below and spaced away from the plunger (22) is a seat (10) that is held within a support (24) so that a central opening (14) of the seat is concentric with the plunger (22). The housing (23) and support (24) are mounted on a stand (25) and there are no containment walls between the plunger (22) and the seat (10) such that the cartridge (1) can be easily located and removed from the seat (10) and that the seat (10) and plunger (22) can be easily accessed for cleaning.

As best seen in Figures 3, 3a and 4, the seat (10) is annular and has in its upper surface a recess (12) concentric with the central opening (14). The annular recess is shaped to receive the end lip (2b) of the cartridge (1) such that the cartridge can stand in the seat (10) with the dispensing aperture (4) of the end piece (3) aligned with the central opening (14) of the seat (10). Between the annular recess (12) and the central opening (14) the upper surface of the seat (10) forms an annular plate (11) which in the embodiment shown in Figures 3 and 4 is in contact with the lower surface of the end piece (3) even before dispensing of frozen confection from the cartridge begins.

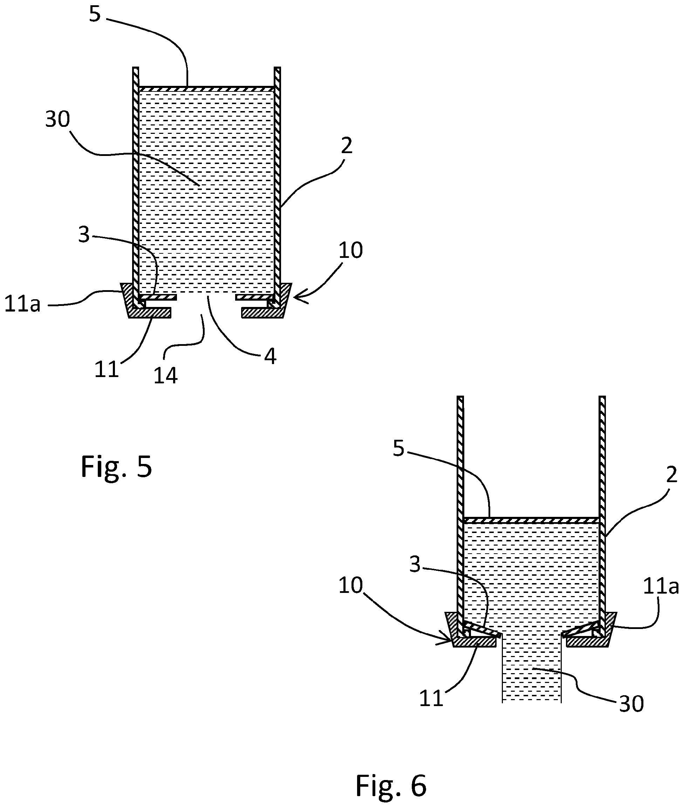

An alternative embodiment of the seat (10) is shown in Figures 5 and 6. In this embodiment the seat (10) comprises an annular planar support plate (11) that has an edge wall (11a) around its circumference which is slightly larger than the circumference of the tubular body (2) of the cartridge (1) so that with the cartridge stood on the annular support plate (11), the outer wall of the end lip (2b) abuts against the inside of the edge wall (11a) of the seat (10). The annular support plate (11) is thus spaced away from the end piece (3) by the length of the end lip (2b) and so is not in contact with the end piece (3) in the absence of a dispensing force. As seen in Figure 6, during dispensing, the dispensing force deforms the end piece (3) out of its planer configuration until it contacts and is supported by the annular plate (11). This means that the seat (10) has less contact with the end piece (3) than the embodiment shown in Figures 3 and 4 and so is more hygienic.

In order to dispense a portion of frozen confection (30) from the cartridge (1). The cartridge is first located in the seat (10) as described above. The handle (21) of the device (20), is then pulled down which actuates downward movement of the plunger (22). The plunger (22) enters the tubular body (2) of the cartridge (1) where it contacts the upper surface of the piston (5). Continued actuation of the handle (21) drives the plunger (22) and therefore the piston (5) further down the tubular body urging the frozen confection 30) through the dispensing aperture (4) and the central opening (14) and into a waiting receptacle (not shown) such as a bowl or cone.

Following dispensing, the handle (21) is pushed back up which in turn retracts the plunger (22) from the tubular body (2). The cartridge (1) can then be removed from the seat (10) and placed in the recycling stream.

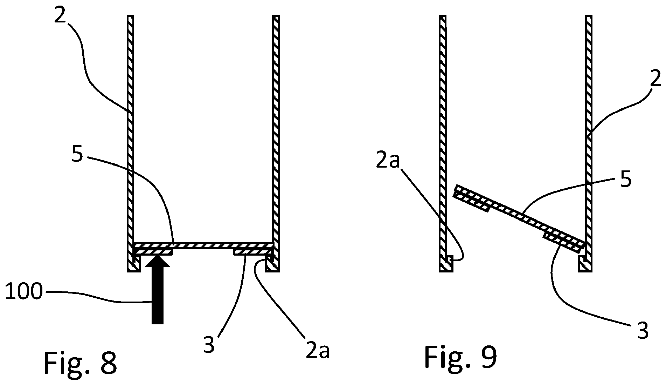

As the end piece (3) is held in place by the rim (2a) and is not fixed to the tubular body (2), both the end piece (3) and the piston (5) can be removed from the tubular body as shown in Figures 8 and 9. The bold arrow (100) in Figure 8 shows the force that can be applied (for example by the finger of a user) to simply dislodge the end piece (3) and piston (5) as shown in Figure 9. Both the end piece (3) and piston (5) can then be tipped out of the open end of the tubular body (2). This is advantageous as it allows for the tubular body (2) to then be flattened to reduce the volume taken in the recycling system and/or it allows for the end piece (3) and tubular body (2) to be made from different materials and recycled in different streams.

## Claims

1. A cartridge (1) from which a frozen confection (30) can be dispensed, the cartridge comprising:
- a tubular body (2) extending from an open end to a dispensing end anc comprising an inwardly projecting rim (2a) at the dispensing end
- a piston (5) slidable within the tubular body (2);
- an end piece (3) closing the dispensing end of the tubular body (2) and comprising a dispensing aperture (4); and
- frozen confection (30) contained within the tubular body (2) between the piston (5) and the end piece (3);
wherein the end piece (3) is not fixed to the tubular body (2) and is retained within the tubular body by the rim (2a).

2. The cartridge as claimed in claim 1 wherein the tubular body (2) is formed from cardboard.

3. The cartridge as claimed in any one of the preceding claims wherein one or both of the piston (5) and end piece (3) is formed from cardboard.

4. The cartridge as claimed in any one of the preceding claims wherein following dispensing of the frozen confection (30) from the cartridge (1), the end piece (3) is slidable within the tubular body (2) and out through the open end.

5. The cartridge as claimed in any one of the preceding claims wherein the end piece (3) Z is a substantially planar disc.

6. The cartridge as claimed in any one of the preceding claims wherein the tubular body (2) of the cartridge has an end lip (2b) that projects away from the end piece

7. A system for dispensing a frozen confection, the system comprising:
(i) a cartridge (1) as claimed in any one of the preceding claims; and
(ii) a device (20) comprising:
- a seat (10) for locating the cartridge (1) in or on the device; (20) and
- a plunger (22) positioned for entering the cartridge (1) through the open end of the tubular body (2) with the cartridge located in the seat, (10) and for engaging with the piston (5) and moving the piston towards the end piece (3) thereby creating a dispensing force to urge the frozen confection (30) out of the dispensing aperture (4).

8. The system as claimed in claim 7 wherein the seat (10) of the device (20) comprises an annular plate that supports the end piece (3) of the cartridge (1) against the dispensing force.

9. A method for dispensing a portion of frozen confection (30) from a cartridge (1), the method comprising the steps of:
a. providing a system as claimed in claim 7 or claim 8;
b. locating the cartridge in the seat; and then
c. driving the plunger (22) into the cartridge (1) through the open end of the tubular body (2) to engage with the piston (5) and move the piston (5) towards the end piece (3) thereby creating a dispensing force to urge the frozen confection out of the dispensing aperture (4).

10. The method as claimed in claim 9 wherein following step c, the end piece (3) is removed from the tubular body. (2)

11. The method as claimed in claim 10 wherein the end piece (3) is removed through the open end of the tubular body (2).

## Patentansprüche

1. Kartusche (1), aus der eine gefrorene Zubereitung (30) ausgegeben werden kann, wobei die Kartusche Folgendes umfasst:
- einen röhrenförmigen Körper (2), der sich von einem offenen Ende zu einem Ausgabeende erstreckt und an dem Ausgabeende einen nach innen vorstehenden Rand (2a) umfasst,
- einen Kolben (5), der in dem röhrenförmigen Körper (2) verschoben werden kann,
- ein Endstück (3), das das Ausgabeende des röhrenförmigen Körpers (2) schließt und eine Ausgabeöffnung (4) umfasst, und
- gefrorene Zubereitung (30), die in dem röhrenförmigen Körper (2) zwischen dem Kolben (5) und dem Endstück (3) enthalten ist;
wobei das Endstück (3) nicht an dem röhrenförmigen Körper (2) befestigt ist und durch den Rand (2a) im Innern des Körpers gehalten wird.

2. Kartusche nach Anspruch 1, wobei der röhrenförmige Körper (2) aus Pappe gebildet ist.

3. Kartusche nach einem der vorgehenden Ansprüche, wobei der Kolben (5) und/oder das Endstück (3) aus Pappe gebildet sind.

4. Kartusche nach einem der vorgehenden Ansprüche, wobei nach der Ausgabe der gefrorenen Zubereitung (30) aus der Kartusche (1), das Endstück (3) innerhalb des röhrenförmigen Körpers (2) und durch das offene Ende hinausgeschoben werden kann.

5. Kartusche nach einem der vorgehenden Ansprüche, wobei das Endstück (3) eine im Wesentlichen ebene Scheibe ist.

6. Kartusche nach einem der vorgehenden Ansprüche, wobei der röhrenförmige Körper (1) der Kartusche eine Endlippe (2b) aufweist, die von dem Endstück weg ragt.

7. System zum Ausgeben einer gefrorenen Zubereitung, wobei das System Folgendes umfasst:
(i) eine Kartusche (1) nach einem der vorhergehenden Ansprüche; und
(ii) eine Vorrichtung (20), die Folgendes umfasst:
- einen Sitz (10) zum Anordnen der Kartusche (1) in oder auf der Vorrichtung (20); und
- einen Stempel (22), der derart positioniert ist, dass er durch das offene Ende des röhrenförmigen Körpers (2) in die Kartusche (1) eintritt, wobei sich die Kartusche in dem Sitz (10) befindet, und in den Kolben (5) eingreift und den Kolben in Richtung des Endstücks (3) bewegt, wodurch er eine Ausgabekraft erzeugt, um die gefrorene Zubereitung (30) aus der Ausgabeöffnung (4) zu drängen.

8. System nach Anspruch 7, wobei der Sitz (10) der Vorrichtung (20) eine ringförmige Platte umfasst, die das Endstück (3) der Kartusche (1) gegen die Ausgabekraft trägt.

9. Verfahren zum Ausgeben einer Portion der gefrorenen Zubereitung (30) aus einer Kartusche (1), wobei das Verfahren die folgenden Schritte umfasst:
a. Bereitstellen eines Systems nach Anspruch 7 oder Anspruch 8;
b. Anordnen der Kartusche in dem Sitz; und dann
c. Treiben eines Stempels (22) in die Kartusche (1) durch das offene Ende des röhrenförmigen Körpers (5), um in den Kolben (5) einzugreifen und den Kolben (5) in Richtung des Endstücks (3) zu bewegen, wobei eine Ausgabekraft erzeugt wird, um die gefrorene Zubereitung aus der Ausgabeöffnung (4) zu drängen.

10. Verfahren nach Anspruch 9, wobei nach dem Schritt c das Endstück (3) aus dem röhrenförmigen Körper (2) entfernt wird.

11. Verfahren nach Anspruch 10, wobei das Endstück (3) durch das offene Ende des röhrenförmigen Körpers (2) entfernt wird.

## Revendications

1. Cartouche (1) à partir de laquelle une confiserie congelée (30) peut être distribuée, la cartouche comprenant :
- un corps tubulaire (2) s'étendant à partir d'une extrémité ouverte jusqu'à une extrémité de distribution et comprenant un bord faisant saillie vers l'intérieur (2a) sur l'extrémité de distribution ;
- un piston (5) pouvant coulisser à l'intérieur du corps tubulaire (2) ;
- une pièce d'extrémité (3) fermant l'extrémité de distribution du corps tubulaire (2) et comprenant une ouverture de distribution (4) ; et
- une confiserie congelée (30) contenue à l'intérieur du corps tubulaire (2) entre le piston (5) et la pièce d'extrémité (3) ;
dans laquelle la pièce d'extrémité (3) n'est pas fixée au corps tubulaire (2) et est retenue à l'intérieur du corps tubulaire par le bord (2a).

2. Cartouche selon la revendication 1, dans laquelle le corps tubulaire (2) est formé à partir de carton.

3. Cartouche selon l'une quelconque des revendications précédentes, dans laquelle un ou les deux du piston (5) et d'une pièce d'extrémité (3) est formé à partir de carton.

4. Cartouche selon l'une quelconque des revendications précédentes, dans laquelle après la distribution de la confiserie congelée (30) à partir de la cartouche (1), la pièce d'extrémité (3) peut coulisser à l'intérieur du corps tubulaire (2) et à l'extérieur par l'extrémité ouverte.

5. Cartouche selon l'une quelconque des revendications précédentes, dans laquelle la pièce d'extrémité (3) est un disque substantiellement planaire.

6. Cartouche selon l'une quelconque des revendications précédentes, dans laquelle le corps tubulaire (2) de la cartouche présente une lèvre d'extrémité (2b) qui fait saillie à partir de la pièce d'extrémité.

7. Système pour distribuer une confiserie congelée, le système comprenant :
(i) une cartouche (1) selon l'une quelconque des revendications précédentes ; et
(ii) un dispositif (20) comprenant :
- un siège (10) pour loger la cartouche (1) dans ou sur le dispositif (20) ; et
- un piston plongeur (22) positionné pour entrer dans la cartouche (1) par l'extrémité ouverte du corps tubulaire (2) avec la cartouche logée dans le siège (10), et pour s'engager avec le piston (5) et déplacer le piston vers la pièce d'extrémité (3) créant par-là une force de distribution pour pousser la confiserie congelée (30) à l'extérieur de l'ouverture de distribution (4).

8. Système selon la revendication 7, dans lequel le siège (10) du dispositif (20) comprend une plaque annulaire qui supporte la pièce d'extrémité (3) de la cartouche (1) contre la force de distribution.

9. Procédé pour la distribution d'une portion de confiserie congelée (30) à partir d'une cartouche (1), le procédé comprenant les étapes consistant à :
a. fournir un système selon la revendication 7 ou revendication 8 ;
b. disposer la cartouche dans le siège ; et puis
c. entraîner le piston plongeur (22) dans la cartouche (1) par l'extrémité ouverte du corps tubulaire (2) pour s'engager avec le piston (5) et déplacer le piston (5) vers la pièce d'extrémité (3) créant par-là une force de distribution pour pousser la confiserie congelée à l'extérieur de l'ouverture de distribution (4).

10. Procédé selon la revendication 9, dans lequel après l'étape c, la pièce d'extrémité (3) est retirée du corps tubulaire (2).

11. Procédé selon la revendication 10, dans lequel la pièce d'extrémité (3) est retirée par l'extrémité ouverte du corps tubulaire (2).
